# EUROPEAN PATENT APPLICATION

(11) **EP 1 172 781 A1**
(43) Date of publication of application: **16.01.2002**
(21) Application number: 00650208.2
(22) Date of filing: 14.12.2000
(51) Int. Cl.: G09F 3/03, F16G 11/04

(54) **Dual disk security lock**

(30) Priority: 11.07.2000 US 614934
(71) Applicant: BRAMMALL, INC., Angola Indiana 46703 (US)
(72) Inventor: Bystry, Jerry A., Orland, Indiana 46776 (US)
(74) Representative: Boyce, Conor

(57) **Abstract**

A security lock (20) includes a cable having two ends (26,28), one of which (26) is fixedly attached to a body (22). The other end of the cable (28) is free and can be inserted through the hasp of a lock. Thereafter, the free end of the cable is inserted into a channel (30) in the body. A locking mechanism in the body allows the cable to be freely inserted into the channel, but prevents the cable from being retracted out of the channel. The locking mechanism comprises a pair of disks which grip the cable when it is moved in one direction and roll out of the way of the cable when it is moved in an opposite direction.

## Description

### BACKGROUND OF THE INVENTION

This invention relates generally to tamper indicating seals and, more particularly, to tamper indicating seals which have an increased resistance to tampering.

Tamper indicating seals are generally used to secure the door hasp of shipping vehicles, such as railroad boxcars, semi-trailers, and other cargo containers. The use of such seals makes it difficult for a person to gain unauthorized access to the goods and materials contained within the shipping vehicle being secured by the seal. In the event that unauthorized entry does occur as a result of breaking or tampering with the seal, the absent or tampered with seal leaves a visual indication of such unauthorized access.

One type of seal generally uses a cable that has one end affixed to a seal and another end which is free. The free end is inserted through a lock or hasp and then inserted back into the seal. The seal is designed to allow the free end of the cable to be inserted therein, but not retracted. Gaining access to the goods being secured by the seal therefore generally requires one of three methods: (1) cutting the cable; (2) tampering with the internal locking mechanism of the seal; or (3) retracting the cable back out of the seal. The first two methods typically provide a clear visual indication that the seal has been tampered with. However, the third method can allow access to be gained to the sealed goods without any overt visual indication. By applying sufficient force, the cable can be retracted out of the seal. Once retracted, access can be gained to the contents of the shipping container, and thereafter the cable reinserted into the seal without providing any visual indication that access has been gained to the stored goods.

In the past, cable seals have required approximately 2,000 lbs. of force to be applied to the cable in order to retract it out of the seal. While such forces provide sufficient deterrence to unauthorized access for a wide variety of applications, there is a need for more robust seals that do not allow cables to be pulled out by forces of this magnitude. Accordingly, the desirability of a seal having an increased minimum force necessary to retract a cable can be seen.

### SUMMARY OF THE INVENTION

Accordingly, the present invention provides a cable seal having an increased minimum cable pullout strength. The increased pullout strength provides significantly more deterrence to tampering with a seal via retracting the cable from the seal body.

A seal according to one embodiment of the present invention includes a body, and an elongated, flexible member, a first disk, a second disk, and a biasing element. The body defines at least one channel and the elongated flexible member is dimensioned to fit within the channel. The first and second disks are positioned inside of the body and in communication with the channel. The biasing element biases the first and second disks toward the channel such that the disks grip the elongated flexible member when it is inserted into the channel. The disks allow the elongated flexible member to be inserted into the channel but prevent the elongated flexible member from being retracted out of the channel in a second direction opposite the first direction.

A seal according to a second embodiment of the invention comprises a cable, an inner member, a first disk, a second disk, an outer shell, and a biasing element. The cable has a free end and a fixed end. The fixed end is affixed to the seal. The inner member defines a channel, along with first and second chambers which are disposed on opposite sides of the channel. The channel is dimensioned to receive the cable. The first and second disks are positioned in the first and second chambers, respectively. The outer shell encloses the inner member and the biasing element biases the first and second disks in a direction such that they grip the cable when the cable is inserted in the channel. The chambers are dimensioned sufficiently large to allow movement of the first and second disks in the chamber. The first and second disks are moveable between a gripping position in which the cable is gripped by the disks and prevented from being retracted out of the channel and a non-gripping position in which the cable can be inserted further into the channel.

The present invention provides a seal which has increased resistance to tampering via an increased resistance to cable retraction. In other embodiments, the seal of the present invention further includes security inserts which further prevent tampering with the seal via dislodging the internal sealing mechanism. These and other benefits, results, and objects of the present invention will be apparent to one skilled in the art, in light of the following specification when read in conjunction with the accompanying drawings.

### BRIEF DESCRIPTION OF THE DRAWINGS

FIG. 1 is a plan view of a seal according to one embodiment of the present invention shown with a cable inserted through the seal;
FIG. 2 is a perspective view of the seal of FIG. 1;
FIG. 3 is a cross-section of the seal of FIG. 2 taken along the line III-III illustrating the internal components of the seal;
FIG. 4 is a perspective, exploded view of the seal of FIG. 1;
FIG. 5 is a perspective view of an inner member of the seal of FIG. 1;
FIG. 6 is an elevational view of a seal disk according to one embodiment of the invention; and
FIG. 7 is an elevational view of a seal disk according to another embodiment of the present invention.

### DESCRIPTION OF THE PREFERRED EMBODIMENTS

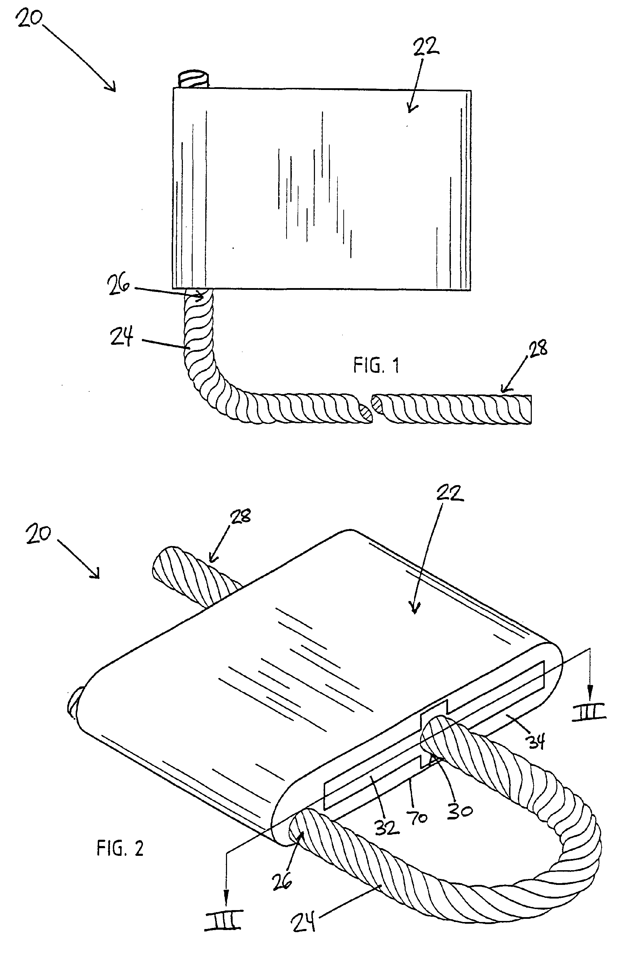

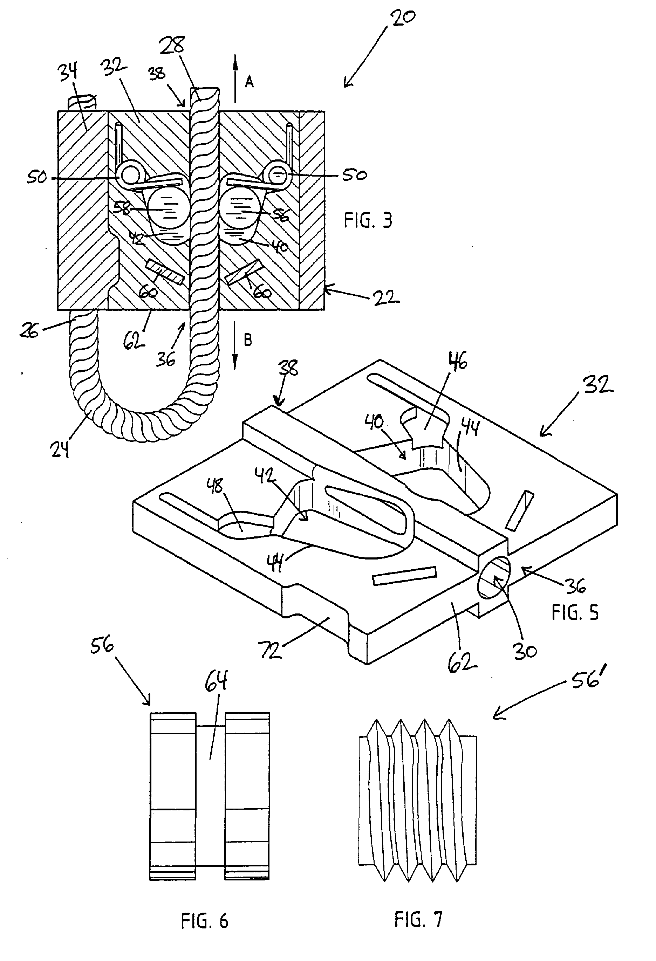

The present invention will now be described with reference to the accompanying drawings wherein like reference numerals correspond to like elements in the several drawings. A seal 20 according to one embodiment of the present invention is depicted in FIGS. 1-4. Seal 20 includes a body 22 and a cable 24 preferably having a diameter of at least ¼ inch. Cable 24 has a first end 26 affixed to body 22 and a second end 28 which is free prior to use of seal 20. In use, free end 28 is inserted through the hasp of a lock and thereafter inserted into a channel 30 defined in body 22. As more fully described herein, seal 20 includes an internal mechanism that allows cable 24 to be inserted into channel 30, but prevents retraction of cable 24 out of channel 30. As depicted in FIG. 3, cable 24 can be moved in the direction labeled A, but is prevented from movement in the direction labeled B. Therefore, once cable 24 is inserted into channel 30, it cannot be retracted without cutting the cable or tampering with seal 20.

As illustrated in FIG. 4, body 22 comprises an inner member 32 and an outer shell 34 which surrounds inner member 32. Channel 30 is defined in inner member 32 and extends from a front end 36 to a back end 38. When seal 20 is in use, free end 28 of cable 24 is inserted into front end 36 of channel 30 and out of back end 38 of channel 30.

Inner member 32 further defines a first chamber 40 and a second chamber 42. First and second chambers 40 and 42 are positioned on opposite sides of channel 30 and, in the current embodiment, are positioned directly across from each other. The first and second chambers 40 and 42 each include a camming surface 44 which is angled with respect to channel 30. Specifically, camming surfaces 44 are angled such that the width of chambers 40 and 42 is narrower toward front end 36. A first and second spring chamber 46 and 48 are also defined in inner member 32 adjacent first and second chambers 40 and 42 respectively. Spring chambers 46 and 48 house springs 50 which are standard coil springs. A stationary end 52 of springs 50 extends away from chambers 40 and 42 and is prevented from moving by inner member 32. A free end 54 of each of springs 50 extends into first and second chambers 40 and 42 and contacts a first and second steel disks 56 and 58 Free ends 54 of each of springs 50 each push first and second disks 56 and 58 in a direction toward front end 36 of channel 30. As first and second disks 56 and 58 are pushed in this direction, they roll along camming surface 44, causing them to exert pressure against cable 24 when it is inserted in channel 30.

When cable 24 is inserted in channel 30, it contacts first and second disks 56 and 58. In order to further insert cable 24 into channel 30, it must be pushed with sufficient force to overcome the biasing force exerted on first and second disks 56 and 58 by springs 50. Stated alternatively, cable 24 pushes first and second disks 56 and 58 out of the way by causing them to roll along camming surface 44 in a direction toward back end 38 of channel 30. This allows cable 24 to be fully inserted into channel 30. However, any attempts to retract cable 24 out of channel 30 are prevented by first and second disks 56 and 58 as explained hereinafter.

When someone tries to retract cable 24 out of channel 30, the frictional contact of the cable against first and second disks 56 and 58 causes these disks to roll down camming surface 44 in a direction toward front end 36 of channel 30. This movement along camming surfaces 44 causes first and second disks 56 and 58 to be forced toward each other and thereby grip cable 24, which is disposed between these two disks. Pulling harder on cable 24 to retract it simply causes first and second disks 56 and 58 to grip cable 24 with increasing force. Retraction of cable 24 out of channel 30 is thereby prevented by the gripping pressure of first and second disks 56 and 58. In the current design, it has been found that it takes upwards of 4,000 lbs. of force to retract cable 24 out of channel 30.

As illustrated in FIGS. 3-5, a pair of security tabs 60 are positioned in inner member 32 between the entry side of seal 20 and first and second chambers 40 and 42. Security tabs 60 form a security insert which helps prevent tampering with the locking mechanism of seal 20. Specifically, security tabs help prevent tampering via drilling into first and second chambers 40 and 42. It can be seen in FIG. 3 that if a person were to drill a hole into inner member 32 from a side 62 of inner member 32, access could be gained to first and second chambers 40 and 42. A rod or other device could then be inserted into this hole and used to push either first or second disks 56 and 58 up camming surface 44, and thus loosen the grip these disks provide on cable 24. With the grip of these disks loosened, it would therefore be possible to retract cable 24 out of body 22. A metallic filler could then be used to fill up these holes and conceal any visually apparent evidence of tampering with the seal. Security tabs 60 are designed to prevent this type of tampering. Security tabs 60 are made out of steel, and preferably hardened steel. In the current embodiment, inner member 32 is made out of zinc, which is a much softer metal than steel. Security tab 60 therefore resists drilling to a far greater extent than does inner member 32. The above described access to first and second chambers 40 and 42 is thereby substantially hindered by the presence of security tabs 60.

As illustrated in FIG. 6, disks 56 and 58 in the current embodiment include a circumferential groove 64 positioned generally in the center of the circumference of the disk. Groove 64 helps provide disks 56 and 58 with better frictional characteristics for retaining cable 24. It will, of course, be understood that other types of surfaces for disks 56 and 58 can be used within the scope of the invention. Disks 56 and 58 could have a completely smooth surface, a knurled surface, a gear-type toothed surface, or a threaded surface. An example of a threaded type of surface is depicted in FIG. 7. Disk 156 of FIG. 7 includes multiple grooves, or threads, which may help to further retain cable 24 within channel 30. The spacing of the threads on disk 156 may be dimensioned to correspond to the filaments or individual wires comprising cable 24, although other dimensions can be used.

While it will be understood that other types of dimensions and cables can be used within the scope of the invention, the current embodiment uses a 7 x 19 ¼-inch aircraft cable. The designation 7 x 19 refers to the fact that the cable is made of seven bundles of individual steel wires wherein each bundle comprises 19 individual steel wires. Each of disks 56 and 58 has a diameter of .375 inches. The width of groove 64 is .06 inches and is centered in the outer surface of the disk. The depth of groove 64 is .015 inches. The total width of the disks is .258 inches.

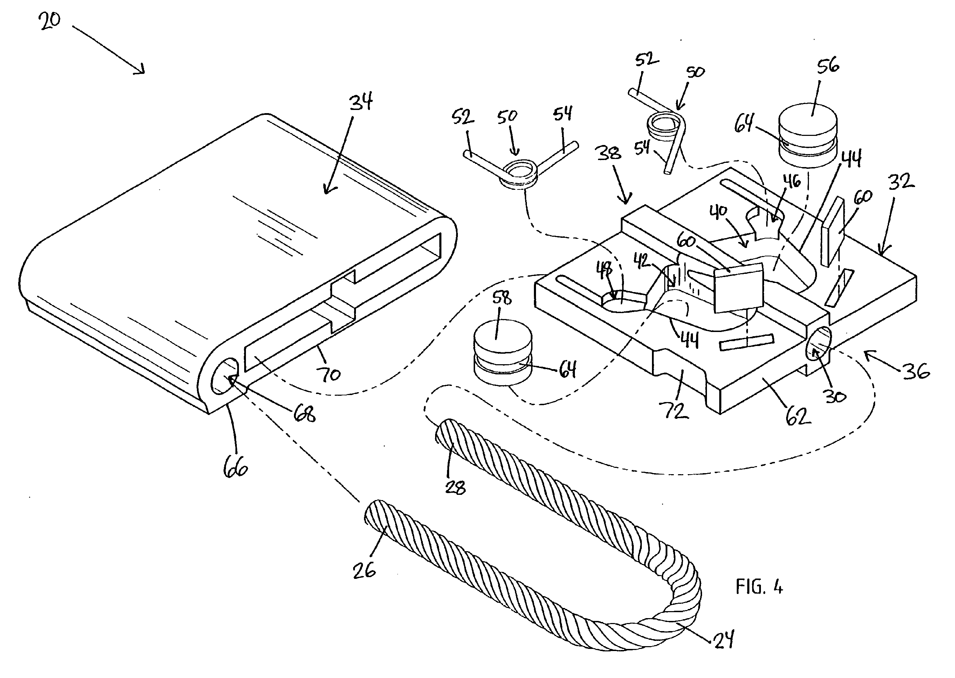

In the current embodiment, outer shell 34 is made of aluminum. Outer shell 34 includes a ridge 66 prior to assembly of seal 20 (FIG. 4). During assembly, the first end 26 of cable 24 is inserted into a channel 68 defined in outer shell 34. The first end 26 is inserted just past the edge of the channel 68 so that it sticks out slightly. This slight extension provides for a better grip on cable 24. Inner member 32, including springs 50 and disks 56 and 58 is then inserted into outer shell 34. A press then compresses ridge 66 such that its surface is flush with an outer surface 70 of seal 20 (FIG. 2). This compression causes first end 26 of cable 24 to be firmly staked within seal 20. This compression process further causes inner member 32 to be secured within outer shell 34. This is accomplished by a notch 72 defined in one side of inner member 32. When ridge 66 is compressed, this compression causes the material of outer shell 34 to flow into notch 72, thereby filling the space defined by notch 72 (see FIG. 3). Inner member 32 is thus prevented from being moved out of outer shell 34.

Prior to use, it may also be desirable to cold stamp a unique serial number onto outer surface 70. By keeping track of which serial numbers are used to secure which containers, the cutting and subsequent replacement of the cut seal with a fresh seal can be detected.

While the present invention has been described in terms of the preferred embodiments discussed in the foregoing specification, it will be understood by one skilled in the art that the present invention is not limited to these particular preferred embodiments but includes any and all such modifications that are within the spirited scope of the present invention as defined in the appended claims. A nonexhaustive list of modifications to the preferred embodiments discussed includes the use of more than two disks, the positioning of the disks at locations other than directly across from each other, and the use of two disks which are of different size from each other. Further modification, are, of course possible.

## Claims

1. A seal comprising:
a body defining at least one channel;
an elongated flexible member dimensioned to fit within said channel;
a first disk positioned inside of said body and in communication with said channel;
a second disk position inside of said body and in communication with said channel;
a biasing element that biases said first and said second disks toward said channel such that said first and second disks grip said elongated flexible member when said elongated flexible member is inserted into said channel, said first and second disks allowing said elongated flexible member to be inserted into said channel in a first direction but preventing said elongated flexible member from being retracted out of said channel in a second direction opposite said first direction.

2. The seal of claim 1 wherein said biasing element comprises a first and a second spring, said first spring biasing said first disk and said second spring biasing said second disk.

3. The seal of claim 1 or 2 wherein at least one of said first and said second disks includes at least one circumferential groove defined in the exterior surface of said disk.

4. The seal of claim 1, 2 or 3 further including at least one security insert positioned in said body adjacent said first and said second disks, said security insert being made of a material more resistant to drilling than said body, said security insert hindering a drill from being drilled into said body toward said first or second disks.

5. The seal of any preceding claim wherein said first and second disks are positioned directly across from each other on opposite sides of said channel.

6. The seal of any preceding claim wherein said channel extends completely through said inner member such that the length of said flexible member that can be inserted into said channel is not limited.

7. The seal of any preceding claim, wherein the elongated member comprises a cable having a free end and a fixed end, said fixed end being affixed to said seal; wherein said body comprises an inner member defining said channel and first and second chambers disposed on opposite sides of said channel, said body further comprising an outer shell enclosing said inner member; the first disk being positioned in said first chamber and the second disk being positioned in said second chamber; and wherein said first and second chambers are dimensioned sufficiently large to allow movement of said first and second disks in said first and second chambers, said first and second disks being movable in said chambers between a gripping position in which said cable is gripped by said disks and prevented from being retracted out of said channel, and a non-gripping position in which said cable can be inserted further into said channel.

8. The seal of claim 7 when directly or indirectly dependent on claim 4, wherein said security insert comprises a first security tab and a second security tab, said first security tab positioned adjacent said first chamber along a side of said chamber opposite said biasing means, said second security tab positioned adjacent said second chamber along a side of said chamber opposite said biasing means.
